# EUROPÄISCHE PATENTSCHRIFT

(11) **EP 1 744 872 B1**
(45) Veröffentlichungstag und Bekanntmachung des Hinweises auf die Patenterteilung: **24.06.2009**
(21) Anmeldenummer: 05714744.9
(22) Anmeldetag: 08.04.2005
(51) Int. Cl.: B30B 9/04, B01D 29/60

(54) **VERFAHREN ZUM BETRIEB EINER FILTERPRESSE MIT PRESSKOLBEN**
METHOD FOR THE OPERATION OF A FILTER PRESS COMPRISING A PLUNGER
PROCEDE POUR FAIRE FONCTIONNER UN FILTRE-PRESSE COMPRENANT UN VERIN DE COMPRESSION

(30) Priorität: 10.05.2004 CH 822042004
(43) Veröffentlichungstag der Anmeldung: 24.01.2007
(73) Patentinhaber: Bucher-Guyer AG, 8166 Niederweningen (CH)
(72) Erfinder: PINNOW, Dieter, CH-5420 Ehrendingen (CH)
(86) Internationale Anmeldenummer: PCT/CH2005/000202
(87) Internationale Veröffentlichungsnummer: WO 2005/108049

(56) Entgegenhaltungen:
- DE-A- 19 715 157
- US-A- 5 579 683
- US-A- 5 613 434

## Beschreibung

### TECHNISCHES GEBIET

Die Erfindung betrifft ein Verfahren zum Betrieb einer Filterpresse zur Fest-Flüssig-Trennung eines Produkts mit einem Pressraum mit Presskolben, eine Anwendung des Verfahrens, eine Filterpresse zur automatisierten Durchführung des Verfahrens sowie eine Verwendung der Filterpresse gemäss dem Oberbegriffen der unabhängigen Patentansprüche.

### STAND DER TECHNIK

Filterpressen mit Presskolben kommen bevorzugterweise in der Lebensmittelindustrie zum Einsatz, z.B. bei der Herstellung von Fruchtsäften. Dabei wird die Maische aus zerkleinerten Früchten in den Pressraum eingebracht und anschliessend durch Vorschieben des Presskolbens unter Druck gesetzt, wobei die flüssige Phase über Filterdrainage-Elemente abgeleitet wird und die feste Phase im Pressraum zurückbleibt. Da der bereitgestellte Pressraum aus prozesstechnischen Gründen nicht vollständig mit Maische gefüllt wird, erfolgt die Vorschubbewegung des Presskolbens in einer ersten Phase ohne Druckbeaufschlagung der Maische, wobei lediglich das Volumen des Pressraums an die im Pressraum vorhandene Maischemenge angepasst wird. Ist das Pressraumvolumen gleich dem Maischevolumen, erfolgt sodann in einer zweiten Phase der Vorschubbewegung die Druckbeaufschlagung der Maische durch den Presskolben zwecks Abpressen von flüssiger Phase von derselben. Da in der ersten Phase der Vorschubbewegung nur geringe Vorschubkräfte erforderlich sind und eine möglichst hohe Vorschubgeschwindigkeit gewünscht ist, während in der zweiten Phase grosse Vorschubkräfte erforderlich sind bei relativ geringer Vorschubgeschwindigkeit, werden heute zum Antreiben des Presskolbens praktisch ausschliesslich Hydraulikzylinder und stufenweise umschaltbare Hydraulikpumpen verwendet, derart, dass dem Hydraulikzylinder in der ersten Phase der Vorschubbewegung ein grosser Volumenstrom Hydraulikflüssigkeit mit geringem Druck zugeführt wird und in der zweiten Phase ein kleiner Volumenstrom mit grossen Druck. Dabei erfolgt die Umschaltung auf einfache Weise durch den Druckanstieg im Hydraulikkreislauf beim Auftreffen des Presskolbens auf die den Pressraum ausfüllende Maischefüllung. Das bestehende Verfahren erlaubt jedoch keine weitere Steigerung der Vorschubgeschwindigkeit, welche aus wirtschaftlicher Sicht sinnvoll wäre, da hierdurch die Druckspitze im Pressraum beim Auftreffen des Presskolbens auf die Maische vergrössert würde, was der wünschenswerten Bildung einer Sekundärfilterschicht auf den Filterdrainage-Elementen abträglich wäre, und ein erhöhter Trubanteil in die abgepresste flüssige Phase geschwemmt würde.

### DARSTELLUNG DER ERFINDUNG

Es stellt sich daher die Aufgabe, ein Verfahren zum Betrieb einer Filterpresse und eine Filterpresse zur Verfügung zu stellen, welche die Nachteile des Standes der Technik nicht aufweisen oder zumindest teilweise vermeiden.

Diese Aufgabe wird von dem Verfahren und der Filterpresse gemäss den unabhängigen Patentansprüchen gelöst.

Ein erster Aspekt der Erfindung betrifft ein Verfahren zum Betrieb einer Filterpresse mit einem Pressraum mit Presskolben zur Fest-Flüssig-Trennung eines bevorzugterweise organischen, flüssigen bis pastösen Produkts. Dabei wird in einem ersten Verfahrensschritt die Filterpresse mit dem der Fest-Flüssig-Trennung zu unterziehenden Produkt angeordnet im Pressraum und mit dem Presskolben angeordnet in einer hinteren Kolbenposition bereitgestellt, wobei das Volumen der im Pressraum befindlichen Menge Produkt deutlich kleiner ist als das Volumen des Pressraums. Der Pressraum ist bei diesem ersten Verfahrensschritt also nur teilweise mit Produkt gefüllt, der Füllungsgrad in dieser Betriebssituation also kleiner 1. In einem zweiten, darauf folgenden Verfahrensschritt wird der Presskolben in einer ersten Phase ausgehend von der hinteren Kolbenposition unter Verkleinerung des Pressraumvolumens vorgeschoben, bis er auf das im Pressraum befindliche Produkt auftrifft. Dies erfolgt zu dem Zeitpunkt, zu dem das Pressraumvolumen dem Volumen des im Pressraum befindlichen Produkts entspricht. In dieser ersten Phase der Vorschubbewegung erfolgt im wesentlichen keine Druckbeaufschlagung des Produkts durch den Presskolben. Sodann wird der Presskolben in einer zweiten Phase, in welcher das Pressraumvolumen gleich dem Volumen der jeweiligen im Pressraum sich befindlichen Produktmenge ist, weiter vorgeschoben, unter Druckbeaufschlagung des Produkts durch den Presskolben und unter Abpressen von flüssiger Phase von dem Produkt. Dabei wird der Presskolben zum Zeitpunkt des Eintretens der Volumengleichheit von Pressraum und im Pressraum angeordnetem Produkt, also wenn der Presskolben am Ende der ersten Phase auf das Produkt auftritt, mit einer Vorschubgeschwindigkeit vorgeschoben, welche kleiner ist als die über die erste Phase der Vorschubbewegung gemittelte durchschnittliche Vorschubgeschwindigkeit. Der Kolben wird also über den überwiegenden Teil der ersten Phase seiner Vorschubbewegung, während welcher keine nennenswerte Druckbeaufschlagung des Produktes im,Pressraum erfolgt, deutlich schneller vorgeschoben als am Ende dieser Phase bzw..am Anfang der darauf folgenden zweiten Phase der Vorschubbewegung, wenn der Druckaufbau im Pressraum beginnt. Dadurch trifft der Kolben mit einer gegenüber der Durchschnittsvorschubgeschwindigkeit der ersten Phase reduzierten Geschwindigkeit auf das Produkt auf und es kommt zu einem gewünschten, allmählichen Druckanstieg im Pressraum ohne ausgeprägte Druckspitze.

Durch das erfindungsgemässe Betriebsverfahren wird es möglich, mit einer gegenüber dem Stand der Technik deutlich gesteigerten Vorschubgeschwindigkeit in der ersten Phase der Kolbenvorschubbewegung höhere Verarbeitungsleistungen zu erzielen, ohne dabei den Trubanteil in der abgepressten flüssigen Phase zu erhöhen. Somit kann bei gesteigerter Wirtschaftlichkeit ein qualitativ gleichwertiges Produkt erzielt werden.

In einer bevorzugten Ausführungsform des Verfahrens wird in der ersten Phase der Vorschubbewegung die Vorschubgeschwindigkeit des Presskolbens stufenweise oder stufenlos von einem Maximalwert der Vorschubgeschwindigkeit auf den Wert der Vorschubgeschwindigkeit zum Zeitpunkt des Auftreffens des Presskolben auf das Produkt verringert, und zwar bevorzugterweise gemäss einem vorgegebenen Vorschubgeschwindigkeitsprofil, welches fix sein kann oder in Abhängigkeit von bestimmten Prozessparametern, wie z.B. von der aktuellen Produktfüllmenge im Pressraum und/oder von der Produktbeschaffenheit, vorbestimmt werden kann. Bei Pressen mit horizontal verschieblichem Presskolben ist auch vorgesehen, die Vorschubgeschwindigkeit in der ersten Phase der Vorschubbewegung bis zum Auftreffen des Presskolbens auf das Produkt in Abhängigkeit von der erforderlichen Vorschubkraft zu steuern, derart, dass bei zunehmender Vorschubkraft infolge des Zusammenschiebens des Produkts im Pressraum die Vorschubgeschwindigkeit abnimmt. Hierdurch lässt sich für die erste Phase der Vorschubbewegung auf einfache Weise eine Selbstregelung realisieren.

Bevorzugterweise wird der Presskolben ausgehend von der hinteren Kolbenposition zuerst mit einer ersten Vorschubgeschwindigkeit in eine vorbestimmte erste Position vorgeschoben, in welcher der Pressraum weiterhin nur teilweise mit Produkt gefüllt ist, der Kolben also noch nicht auf das Produkt aufgetroffen ist. Sodann wird der Presskolben ausgehend von der ersten Position mit einer zweiten Vorschubgeschwindigkeit in eine zweite Position vorgeschoben, in welcher Volumengleichheit von Pressraum und im Pressraum angeordnetem Produkt vorliegt und das im Pressraum befindliche Produkt vom Presskolben unter Druck gesetzt wird. Dabei wird die zweite Vorschubgeschwindigkeit kleiner gewählt als die erste Vorschubgeschwindigkeit. Hierdurch trifft der Presskolben während seiner Vorschubbewegung zwischen der ersten und der zweiten Position mit der kleineren zweiten Vorschubgeschwindigkeit auf das Produkt auf und setzt dieses sodann unter Druck, wodurch das Abpressen von flüssiger Phase vom Produkt eingeleitet wird. Dieses Verfahren weist den Vorteil auf, dass es mit kostengünstigen, stufenweise schaltbaren Hydraulikantrieben für den Presskolben realisierbar ist und sich daher auch für den Betrieb bereits bestehender Filterpressen eignet.

Auch ist es bevorzugt, wenn die erste Position derartig vorbestimmt wird, dass bei ihrem Erreichen ein bestimmter Füllungsgrad des Pressraums vorliegt oder der Presskolben einen bestimmten Abstand zu derjenigen Kolbenposition aufweist, bei welcher Volumengleichheit von Pressraum und im Pressraum angeordnetem Produkt vorliegt, der Presskolben also auf das Produkt auftrifft. Hierdurch wird es möglich, die Umschaltung auf die langsamere zweite Vorschubgeschwindigkeit jeweils kurz vor dem Auftreffen des Presskolbens auf das Produkt vorzunehmen, so dass sich minimale Kolbenlaufzeiten ergeben und gleichzeitig sichergestellt wird, dass der Kolben mit der langsameren zweiten Vorschubgeschwindigkeit auf das Produkt auftrifft.

Auch ist es bevorzugt, wenn der Presskolben in der zweiten Phase der Vorschubbewegung solange mit der zweiten Vorschubgeschwindigkeit vorgeschoben wird, bis ein vorgegebener Druck im Pressraum erreicht ist. Hierdurch lässt sich ein nahtloser Übergang in den eigentlichen Abpressprozess erreichen.

In einer weiteren bevorzugten Ausführungsform des Verfahrens wird vor der Vorschubbewegung des Presskolbens mit diesem ein vorangehender Pressvorgang durchgeführt, bei welchem flüssige Phase von dem Produkt abgepresst wird. Dabei wird zur Vorbestimmung des Vorschubgeschwindigkeitsprofils, und bei abgestuften Geschwindigkeitsprofilen zur Vorbestimmung der ersten Position, die Position des Presskolbens am Ende des zuvor durchgeführten Pressvorgangs ermittelt. Aus dieser ermittelten Position lässt sich sodann, bei zusätzlichen Kenntnis etwaiger nach dem Ende des vorausgegangenen Pressvorgangs zugeführter oder abgeführter Mengen von Produkt, Auswaschfluid oder flüssiger Produktphase, die voraussichtliche Position des Presskolbens beim Auftreffen auf die im Pressraum befindliche Produktmenge vorausbestimmen und das Vorschubgeschwindigkeitsprofil entsprechend anpassen, was das Verfahren besonders geeignet macht für einen Impulsfüllbetrieb mit Zwischenabpressen von flüssiger Phase oder für ein intervallweises Pressen mit zwischengeschaltetem Auflockern des Produkts und gegebenenfalls zusätzlicher Zuführung von Waschfluid in den Pressraum. Es ist zudem auch vorgesehen, zusätzlich zur Position des Presskolbens am Ende des zuvor durchgeführten Pressvorgangs den Pressraumdruck beim Erreichen dieser Kolbenposition zu ermitteln und diesen ermittelten Druckwert ebenfalls für die Bestimmung der voraussichtlichen Position des Presskolbens beim Auftreffen auf die im Pressraum befindliche Produktmenge bzw. für die Anpassung des Vorschubgeschwindigkeitsprofils zu verwenden, z.B. um eine sich verändernde Kompressibilität der Maische zu berücksichtigen.

Entsprechend ist es bevorzugt, wenn zwischen dem Ende des vorangegangenen Pressvorgangs und dem Zeitpunkt des Eintretens der Volumengleichheit von Pressraum und im Pressraum angeordnetem Produkt weiteres Produkt oder ein Waschfluid zum Pressraum zugeführt wird, das Verfahren also beim Impulsfüllbetrieb oder beim Auswaschbetrieb eingesetzt wird. Hierbei treten die Vorteile des erfindungsgemässen Verfahrens besonders deutlich zu Tage.

Auch ist es bevorzugt, wenn für die Vorausbestimmung des jeweiligen Vorschubgeschwindigkeitsprofils, und bei einem abgestuften Geschwindigkeitsprofil für die Vorausbestimmung der ersten Position, die dem Pressraum zugeführte Produkt- oder Auswaschfluidmenge ermittelt wird, um jeden einzelnen Pressvorgang optimieren zu können.

In noch einer weiteren bevorzugten Ausführungsform des Verfahren wird die Vorschubgeschwindigkeit des Presskolbens in der zweiten Phase der Vorschubbewegung nach Erreichen eines bestimmten Pressraumdrucks oder nach Erreichen einer bestimmten Kolbenposition derart geregelt, dass ein bestimmter Druckverlauf beim Abpressen von flüssiger Phase im Pressraum erzielt wird.

Dabei ist es vorteilhaft, wenn der Druckverlauf spezifisch für das zu pressende Produkt und/oder in Abhängigkeit vom aktuellen Verlauf des Abflusses von flüssiger Phase gewählt wird, da sich so optimale Pressergebnisse erzielen lassen

In noch einer weiteren bevorzugten Ausführungsform des Verfahren wird für die Durchführung des Verfahrens eine Filterpresse verwendet, bei der zwischen dem Presskolben und den übrigen Begrenzungen des Pressraums eine Vielzahl flexibler Filterdrainage-Elemente angeordnet ist, zum Abführen der flüssigen Phase des Produkts aus dem Pressraum bei gleichzeitigem Zurückhalten der festen Phase im Pressraum während dem Pressen. Solche Pressen sind besonders geeignet für einen Betrieb gemäss dem erfindungsgemässen Verfahren.

Ein zweiter Aspekt der Erfindung betrifft eine Anwendung des Verfahrens gemäss dem ersten Aspekt der Erfindung zur Fest-Flüssig-Trennung von Frucht- oder Gemüsemaischen. Bei dieser Verwendung treten die Vorteile der Erfindung besonders deutlich zu Tage.

Ein dritter Aspekt der Erfindung betrifft eine Filterpresse mit einem Pressraum zur Aufnahme eines zu pressenden Produkts, mit einem im Pressraum angeordneten Presskolben zur Druckbeaufschlagung des Produkts und mit einer Pressensteuerung, welche einen automatischen Betrieb der Presse gemäss dem Verfahren nach dem ersten Aspekt der Erfindung ermöglicht. Dabei ist die Pressensteuerung in der Lage, eine Vorschubbewegung des Presskolben ausgehend von einer hinteren Position bei nicht vollständig mit Produkt gefülltem Pressraum derartig zu steuern, dass der Presskolben ausgehend von der hinteren Kolbenposition in einer ersten Phase der Vorschubbewegung ohne Druckbeaufschlagung des Produkts eine Verkleinerung des Pressraumvolumens bis auf das Volumen des im Pressraum befindlichen Produkts bewirkt und sodann in einer zweiten Phase der Vorschubbewegung eine Druckbeaufschlagung des Produkts und ein Abpressen von flüssiger Phase von dem Produkt bewirkt, wobei der Presskolben zum Zeitpunkt des Eintretens der Volumengleichheit von Pressraum und im Pressraum angeordnetem Produkt eine Vorschubgeschwindigkeit aufweist, welche kleiner ist als die über die erste Phase der Vorschubbewegung gemittelte durchschnittliche Vorschubgeschwindigkeit. Dieses kann durch Abfahren bestimmter fester oder variabler, stufenloser oder abgestufter Vorschubgeschwindigkeitsprofile erfolgen. Als Antriebe kommen bei stufenlosen Vorschubgeschwindigkeitsprofilen bevorzugterweise Hydraulikantriebe mit stufenlos verstellbaren Axialkolbenpumpen zum Einsatz, wobei jedoch auch die Verwendung stufenweise schaltbarer Pumpen mit Bypassventilen vorgesehen ist.

Dabei ist es bevorzugt, wenn die Pressensteuerung in der Lage ist, das Vorschubgeschwindigkeitsprofil in Abhängigkeit von bestimmten Prozessparametern zu steuern, bevorzugterweise in Abhängigkeit von der im Pressraum befindlichen Menge an Produkt und/oder von der Art des Produkts, so dass bei jedem Pressvorgang ein optimales Vorschubgeschwindigkeitsprofil gefahren werden kann.

Bevorzugterweise ist die Pressensteuerung in der Lage, die Vorschubbewegung des Presskolbens derartig zu steuern, dass sich der Presskolben zuerst ausgehend von der hinteren Kolbenposition mit einer ersten Vorschubgeschwindigkeit in eine vorbestimmte erste Position bewegt, in welcher der Pressraum weiterhin nur teilweise mit Produkt gefüllt ist, und sich sodann ausgehend von der ersten Position mit einer zweiten Vorschubgeschwindigkeit, welche kleiner als die ersten Vorschubgeschwindigkeit ist, in eine zweite Position bewegt, in welcher das im Pressraum befindliche Produkt vom Presskolben unter Druck gesetzt wird und flüssige Phase vom Produkt abgepresst wird. Solche Filterpressen lassen sich mit kostengünstigen, stufenweise schaltbaren Hydraulikantrieben realisieren und können auch durch Nachrüsten existierender Filterpressen mit einer geeigneten Pressensteuerung realisiert werden.

Ist die Pressensteuerung dabei in der Lage, den Füllungsgrad des Pressraums für verschiedenen Positionen des Presskolbens und/oder die voraussichtliche Position des Presskolbens bei Volumengleichheit von Pressraumvolumen und Volumen der im Pressraum sich befindlichen Produktmenge im Voraus zu ermitteln, bevorzugterweise während dem jeweiligen Vorlauf des Presskolbens, und das Vorschubgeschwindigkeitsprofil derartig einzustellen, dass die erste Position bei einem bestimmten Füllungsgrad des Pressraums oder bei einem bestimmten Abstand zu derjenigen Position des Presskolbens erreicht wird, bei welcher Volumengleichheit von Pressraumvolumen und Volumen der im Pressraum sich befindlichen Produktmenge vorliegt, so ist es möglich, die erste Position bzw. die Umschaltung der Vorschubgeschwindigkeit auf die kleinere Vorschubgeschwindigkeit jeweils kurz vor dem Auftreffen des Presskolbens auf das Produkt vorzunehmen und so die Pressenleistung zu optimieren.

Mit Vorteil ist die Pressensteuerung des Weiteren in der Lage, in der zweiten Phase der Vorschubbewegung die Vorschubbewegung derartig zu steuern, dass ein bevorzugterweise in Abhängigkeit vom abzupressenden Produkt vorbestimmter Druckverlauf und/oder ein in Abhängigkeit vom aktuellen Saftabfluss berechneter Druckverlauf im Pressraum während dem Abpressen von flüssiger Phase vom Produkt abgefahren werden kann, so dass auch hier eine individuelle Optimierung möglich ist.

In einer weiteren bevorzugten Ausführungsform der Filterpresse ist mit der Pressensteuerung zusätzlich die Zufuhr von abzupressendem Produkt und/oder von Auswaschfluid zum Pressraum bevorzugterweise automatisch steuerbar, so dass der gesamte Betrieb der Presse vom Füllen derselben bis zur Entleerung automatisiert werden kann.

In noch einer weiteren bevorzugten Ausführungsform ist die Filterpresse derartig aufgebaut, dass sie, angeordnet zwischen dem Presskolben und den übrigen Begrenzungen des Pressraums, eine Vielzahl flexibler Filterdrainage-Elemente aufweist, zum Abführen der flüssigen Phase des Produkts aus dem Pressraum bei gleichzeitigem Zurückhalten der festen Phase desselben im Pressraum während dem Pressen. Solche Pressen erlauben eine besonders hohe Ausbeute und können durch die Erfindung in ihrer Leistung deutlich gesteigert werden.

Ein vierter und letzter Aspekt der Erfindung betrifft die Verwendung der Filterpresse gemäss dem dritten Aspekt der Erfindung zur Fest-Flüssig-Trennung von Frucht- oder Gemüsemaischen in der Lebensmittelindustrie. Hier ergibt sich aufgrund der grossen zu verarbeitenden Mengen ein besonders grosser wirtschaftlicher Nutzen.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch eine horizontale Filterkolbenpresse zur Durchführung des erfindungsgemässen Verfahrens;
Fig. 2 eine graphische Darstellung des Verlaufs von Presskolbenhub H und Pressraumdruck P über der Zeit t bei einem ersten erfindungsgemässen Verfahren zum Betrieb der Filterpresse aus Fig. 1;
Fig. 3 eine Darstellung wie Fig. 2 bei einem zweiten erfindungsgemässen Betriebsverfahren;
Fig. 4 eine Darstellung wie Fig. 2 bei einem dritten erfindungsgemässen Betriebsverfahren; und
Fig. 5 eine Darstellung wie Fig. 2 bei einem vierten erfindungsgemässen Betriebsverfahren.

### WEGE ZUR AUSFÜHRUNG DER ERFINDUNG

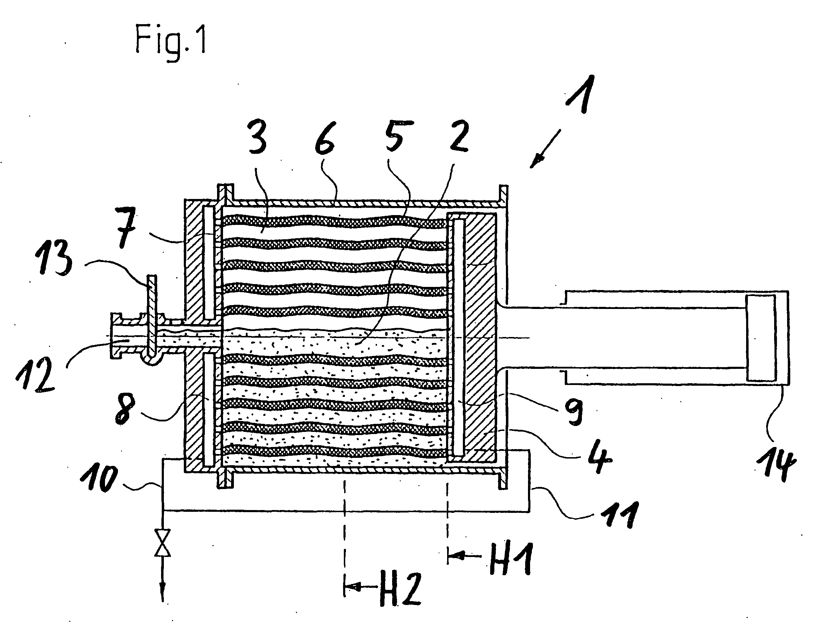

Eine horizontale Filterkolbenpresse zur Durchführung des erfindungsgemässen Verfahrens ist in Fig. 1 im Schnitt dargestellt. Die Filterkolbenpresse 1 umfasst einen zylindrischen Pressenmantel 6, in welchem horizontal verschieblich ein Presskolben 4 angeordnet ist und welcher an seinem der Presskolbeneintrittsseite gegenüberliegenden Ende mit einer Druckplatte 7 verschlossen ist. Der Pressenmantel 6, die Druckplatte 7 und der Presskolben 4 bilden zusammen einen Pressraum 3 zur Aufnahme des Pressguts 2, dessen Volumen durch Verschieben des Presskolbens 4 veränderbar ist. Angeordnet zwischen Druckplatte 7 und Presskolben 4 ist eine Vielzahl von flexiblen Filterdrainage-Elementen 5, welche beim Pressen die flüssige Phase des Pressguts 2 in Sammelkammern 8, 9 in der Druckplatte 7 und im Presskolben 4 und von dort in Abflussleitungen 10, 11 ableiten und die feste Phase im Pressraum 3 zurückhalten. Das Zuführen von Pressgut 2 zum Pressraum 3 erfolgt über eine zentrale Einfüllöffnung 12, welche nach dem Einbringen von Pressgut 2 mit einem Schieber 13 verschlossen wird. Der Presskolben 4 wird von einem doppeltwirkenden Hydraulikzylinder 14 angetrieben, der mit einer Hydraulikpumpe (nicht gezeigt) wirkverbunden ist. In der dargestellten Situation befindet sich der Presskolben 4 in einer anspruchsgemässen hinteren Kolbenposition H1, und der Pressraum 3 ist etwa zur Hälfte mit Fruchtmaische 2 als anspruchsgemässes Produkt gefüllt.

Wird der Presskolben 4 ausgehend von der dargestellten Situation durch entsprechende Aktivierung des Hydraulikantriebs 14 nach links in Richtung auf die Druckplatte 7 zu bewegt, so wird hierdurch das Volumen des Pressraums 3 solange ohne nennenswerten Druckaufbau im Pressraum 3 verkleinert, bis der Presskolben 4 bei Position H2 in Folge der dann eintretenden Volumengleichheit von Pressraum 3 und darin befindlicher Maischemenge 2 auf die Maische 2 auftrifft. Sodann erfolgt bei weiterer Vorschubbewegung ein Druckaufbau im Pressraum 3 und ein Abfliessen von flüssiger Phase von der Fruchtmaische 2 über die Filterdrainage-Elemente 5 in die Abflussleitungen 10, 11.

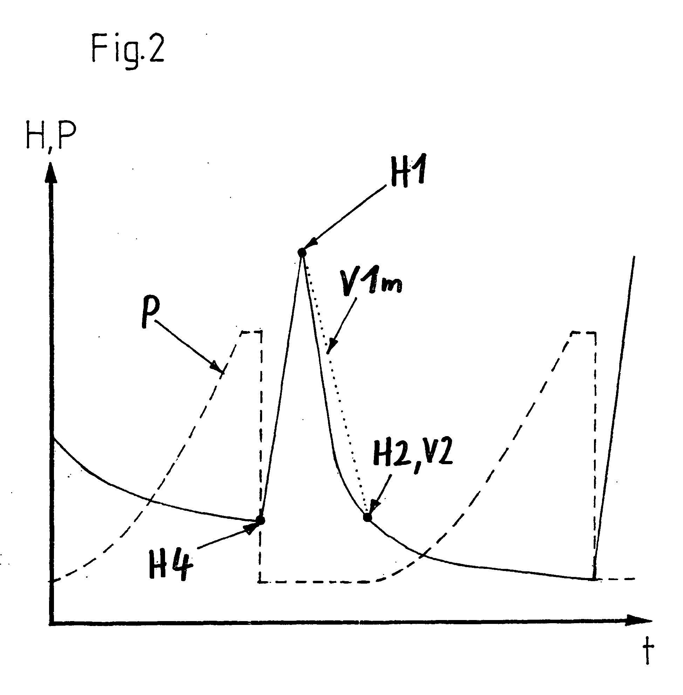

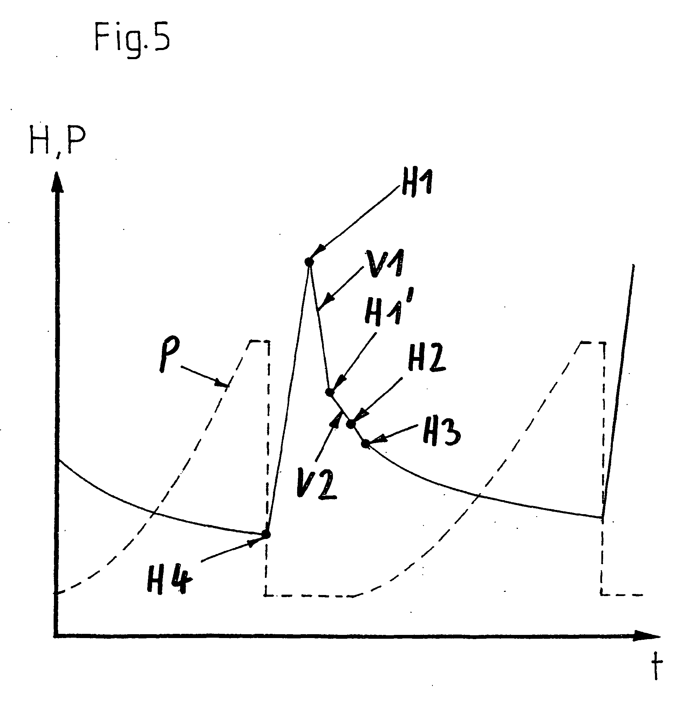

Die Figuren 2 bis 5 zeigen jeweils eine graphische Darstellung des Verlaufs der Presskolben-Hubposition H (durchgezogene Linie) und des Pressraumdrucks P (gestrichelte Linie) über der Zeit t beim Betrieb der in Fig. 1 gezeigten Filterpresse 1 gemäss einem erfindungsgemässen Verfahren. Dabei wird jeweils einer von mehreren hintereinander geschalteten Pressvorgängen mit zwischengeschalteter Mischgutauflockerung (Fig. 2 bis 4) bzw. mit zwischengeschaltetem Impulsfüllintervall (Fig. 5) dargestellt. Wie zu erkennen ist, wird der Presskolben 4 jeweils zu Beginn des Pressvorgangs aus der Position H4, welche er am Ende des vorausgegangenen Pressvorgangs erreicht hat, in die hintere Kolbenposition H1 zurückgezogen, wodurch die Filterdrainage-Elemente 5 im Pressraum 3 bei gleichzeitiger Vergrösserung des Pressraumvolumens gestreckt und die bereits einen erhöhten Feststoffanteil aufweisende Maische 2 im Pressraum 3 aufgelockert wird. Bei dem in Fig. 5 dargestellten Verfahren wird zudem, wie bereits erwähnt wurde, beim Zurückfahren des Presskolbens 4 weitere Maische 2 in den Pressraum 3 eingebracht.

Anschliessend setzt die Vorschubbewegung des Presskolbens 4 ein, welche bei allen dargestellten Verfahren mit einer maximalen Vorschubgeschwindigkeit beginnt und mit einer minimalen Vorschubgeschwindigkeit endet, wobei sich die in den Figuren 2 bis 5 dargestellten verschiedenen erfindungsgemässen Verfahren durch den zeitlichen Verlauf der Vorschubbewegung, also durch ihr Vorschubgeschwindigkeitsprofil, voneinander unterscheiden.

Bei dem in Fig. 2 dargestellten Betriebsverfahren erfolgt die gesamte Vorschubbewegung des Presskolbens 4 ausgehend von der hinteren zurückgezogenen Kolbenposition H1 bis zum Ende der Vorschubbewegung gemäss einem stufenlosen Vorschubgeschwindigkeitsprofil, bei welchem die Vorschubgeschwindigkeit mit zunehmendem Presskolbenhub allmählich abnimmt. Dabei weist der Presskolben in der Position H2, in welcher er auf die Maische 2 auftrifft, eine vorbestimmte Vorschubgeschwindigkeit V2 auf, welche wesentlich geringer ist als die Durchschnittsvorschubgeschwindigkeit V1m, mit welcher er die Verschiebung zwischen der hinteren Kolbenposition H1 und der Auftreff-Kolbenposition H2 zurückgelegt hat. Das stufenlose Vorschubgeschwindigkeitsprofil wird durch Verwendung einer stufenlos verstellbaren Axialkolbenpumpe für die Versorgung des Hydraulikzylinders 14 und entsprechende Ansteuerung derselben durch eine computergestützte Pressensteuerung realisiert. Dabei wird, um sicherzustellen, dass der Pressenkolben 4 beim Auftreffen auf die Maische 2 immer die vorbestimmte zweite Vorschubgeschwindigkeit V2 aufweist, die Endposition H4 des Presskolbens 4 beim vorhergehenden Pressvorgang, welche beim nachfolgenden Pressvorgang im wesentlichen der Position H2 des Presskolbens 4 beim Auftreffen auf die Maische 2 im folgenden Pressvorgang entspricht, ermittelt und sodann von der Pressensteuerung zur entsprechenden Anpassung des Vorschubgeschwindigkeitsprofils verwendet. Auf diese Weise wird das Vorschubgeschwindigkeitsprofil für jeden einzelnen Pressvorgang automatisch optimiert.

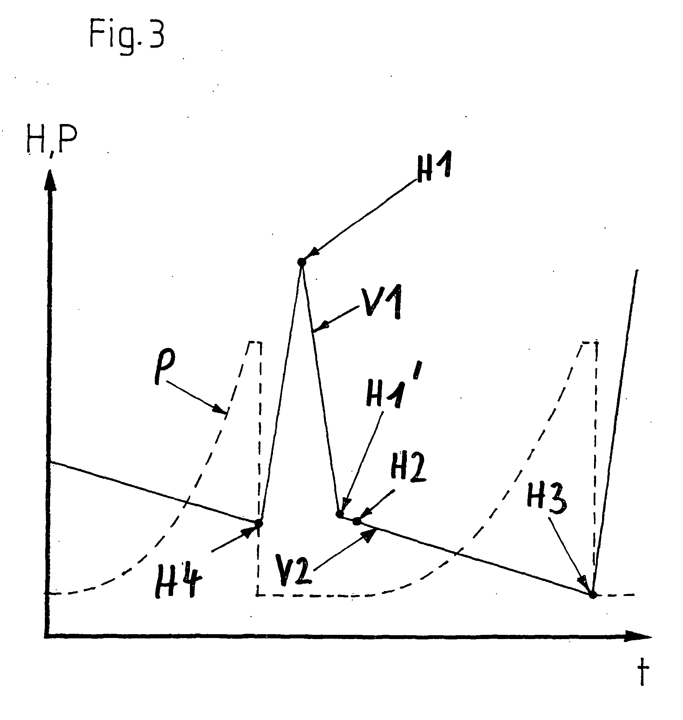

Bei dem in Fig. 3 dargestellten Betriebsverfahren erfolgt die Vorschubbewegung des Presskolbens 4 ausgehend von der hinteren Kolbenposition H1 bis zu einer ersten Kolbenposition H1', welche kurz vor der Position H2 liegt, bei welcher der Presskolben 4 auf die Maische 2 auftrifft, mit einer ersten konstanten Vorschubgeschwindigkeit V1 und davon ausgehend bis zu einer zweiten Position H3, welche hier gleichzeitig der Endposition der Kolbenvorschubbewegung entspricht, mit einer zweiten konstanten Vorschubgeschwindigkeit V2, welche wesentlich kleiner ist als die ersten Vorschubgeschwindigkeit V1. Dabei trifft der Presskolben 4 mit der kleineren Vorschubgeschwindigkeit V2 auf die Maische 2 auf. Das abgestufte Vorschubgeschwindigkeitsprofil wird hier durch Verwendung einer zweistufig schaltbaren Hydraulikpumpe als Versorgungseinheit für den Hydraulikzylinder 14 und entsprechende Umschaltung derselben im Punkt H1' durch die Pressensteuerung realisiert, wobei auch hier mit der Pressensteuerung die Endposition H4 des Presskolbens 4 beim vorhergehenden Pressvorgang und aus dieser die Position H2 des Presskolbens 4 beim Auftreffen auf die Maische 2 ermittelt wird und sodann mit Hilfe einer vorgegebenen Hubdifferenz der Umschaltpunkt H1' festgelegt wird. Auf diese Weise kann sichergestellt werden, dass die Umschaltung auf die langsamere Vorschubgeschwindigkeit V2 immer um eine bestimmte Hubdifferenz vor dem Auftreffen des Presskolbens 4 auf die Maische 2 erfolgt. Es ist zudem auch vorgesehen, zusätzlich zur Kolbenendposition H4 den bei dieser erreichten Pressraumdruck P zu ermitteln und für die Bestimmung der Auftreffposition H2 bzw. des Umschaltpunktes H1' mit auszuwerten, z.B. um eine über mehrere hintereinander geschaltete Pressvorgänge sich verändernde Kompressibilität der Maische zu berücksichtigen.

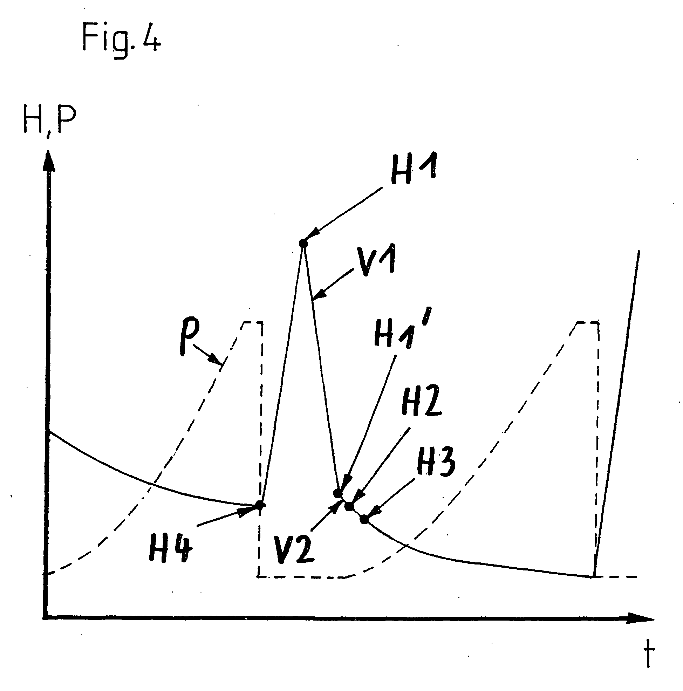

Bei dem in Fig. 4 dargestellten Betriebsverfahren erfolgt die Vorschubbewegung des Presskolbens 4, wie schon bei dem in Fig. 3 gezeigten Verfahren, ausgehend von der hinteren zurückgezogenen Kolbenposition H1 bis zu einer ersten Kolbenposition H1', welche kurz vor der Auftreff-Position H2 des Presskolbens 4 auf die Maische 2 liegt, mit einer ersten konstanten Vorschubgeschwindigkeit V1 und davon ausgehend bis zu einer zweiten Position H3 mit einer zweiten konstanten Vorschubgeschwindigkeit V2, welche wesentlich kleiner ist als die ersten Vorschubgeschwindigkeit V1, so dass der Presskolben 4 mit der kleineren Vorschubgeschwindigkeit V2 auf die Maische 2 auftrifft. Im Gegensatz zu dem in Fig. 3 dargestellten Verfahren liegt die zweite Position H3, welche das Ende der Vorschubbewegung des Presskolbens 4 mit der zweiten Vorschubgeschwindigkeit V2 repräsentiert, nicht am Ende der gesamten Vorschubbewegung des Presskolbens 4, sondern zwischen der Position H2, bei welcher der Presskolben 4 auf die Maische 2 auftrifft, und dem Ende der Vorschubbewegung. Im vorliegenden Fall ist die zweite Position H3 dann erreicht, wenn der Pressraumdruck P einen bestimmten Schwellenwert übersteigt. Bei Erreichen dieses Schwellenwerts schaltet die Pressensteuerung sodann auf eine Regelungsvariante um, bei der ein vorbestimmter Druckverlauf im Pressraum durch entsprechende Steuerung der Kolbenvorschubgeschwindigkeit abgefahren wird. An Stelle der Verwendung einer bestimmten Druckschwelle ist es auch möglich, eine bestimmte Hubdifferenz gegenüber der Position H2 als Kriterium für das Vorliegen der zweiten Position H3 und für die anschliessende Umschaltung auf Druckverlaufsregelung zu verwenden.

Das in Fig. 5 dargestellte Betriebsverfahren unterscheidet sich von dem in Fig. 4 dargestellten Verfahren lediglich dadurch, dass zwischen der Endposition H4 der Kolbenvorschubbewegung des vorangehenden Pressvorgangs und dem Auftreffen des Presskolbens 4 auf die Maische 2 in der Position H2 dem Pressraum 3 weitere Maische 2 zugeführt wird, so dass das Volumen der im Pressraum 3 befindlichen Maischemenge 2 vergrössert wird und die Auftreffposition H2 vor der früheren Kolbenendposition H4 liegt. Um die Position des Auftreffens des Presskolbens 4 auf die Maische 2 und die zugehörige erste Position H1' bestimmen zu können, ermittelt die Pressensteuerung im vorliegenden Fall neben der Kolbenendposition H4 des vorangehenden Pressvorgangs zusätzlich auch die Menge an zusätzlich zugeführter Maische 2.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Verfahren zum Betrieb einer Filterpresse (1) zur Fest-Flüssig-Trennung eines Produkts (2), mit einem Pressraum (3) mit Presskolben (4), umfassend die Schritte:
a) Bereitstellen der Filterpresse (1) mit abzupressendem Produkt (2) angeordnet im Pressraum (3) und mit dem Presskolben (4) positioniert in einer hinteren Kolbenposition (H1), derart, dass der Pressraum (3) nur teilweise mit Produkt (2) gefüllt ist; und
b) Vorschieben des Presskolbens (4) ausgehend von der hinteren Kolbenposition (H1) in einer ersten Phase der Vorschubbewegung ohne Druckbeaufschlagung des Produkts (2) unter Verkleinerung des Pressraumvolumens bis auf das Volumen des im Pressraum (3) befindlichen Produkts (2) und sodann in einer zweiten Phase der Vorschubbewegung unter Druckbeaufschlagung des Produkts (2) durch den Presskolben (4) und unter Abpressen von flüssiger Phase von dem Produkt (2),
**dadurch gekennzeichnet, dass** der Presskolben (4) zum Zeitpunkt (H2) des Eintretens der Volumengleichheit von Pressraum (3) und im Pressraum (3) angeordnetem Produkt (2) mit einer Vorschubgeschwindigkeit (V2) vorgeschoben wird, welche kleiner ist als die über die erste Phase der Vorschubbewegung gemittelte durchschnittliche Vorschubgeschwindigkeit (V1m, V1).

2. Verfahren nach Anspruch 1, **dadurch gekennzeichnet, dass** die Vorschubgeschwindigkeit des Presskolbens in der ersten Phase der Vorschubbewegung, insbesondere gemäss einem vorbestimmten Vorschubgeschwindigkeitsprofil, ausgehend von einer Maximalvorschubgeschwindigkeit abgestuft oder stufenlos auf die Vorschubgeschwindigkeit (V2) zum Zeitpunkt (H2) des Eintretens der Volumengleichheit von Pressraum (3) und im Pressraum (3) angeordnetem Produkt (2) verringert wird.

3. Verfahren nach Anspruch 2, **dadurch gekennzeichnet, dass** der Presskolben (4) zuerst ausgehend von der hinteren Kolbenposition (H1) mit einer ersten Vorschubgeschwindigkeit (V1) in eine vorbestimmte erste Position (H1') vorgeschoben wird, in welcher der Pressraum (3) weiterhin nur teilweise mit Produkt (2) gefüllt ist, und sodann ausgehend von der ersten Position (H1') mit einer zweiten Vorschubgeschwindigkeit (V2), welche kleiner als die ersten Vorschubgeschwindigkeit (V1) ist, in eine zweite Position (H3) vorgeschoben wird, in welcher Volumengleichheit von Pressraum (3) und im Pressraum (3) angeordnetem Produkt (2) vorliegt und das im Pressraum (3) befindliche Produkt (2) vom Presskolben (4) unter Druck gesetzt wird.

4. Verfahren nach Anspruch 3, **dadurch gekennzeichnet, dass** die erste Position (H1') derartig vorbestimmt wird, dass bei in der ersten Position (H1') angeordnetem Presskolben (4) ein bestimmter Füllungsgrad des Pressraums (3) vorliegt oder der Presskolben (4) einen bestimmten Abstand zu der Position (H2) aufweist, bei welcher bei weiterem Vorschieben des Presskolbens (4) Volumengleichheit von Pressraum (3) und im Pressraum (3) angeordnetem Produkt (2) eintritt.

5. Verfahren nach einem der Ansprüche 3 bis 4, **dadurch gekennzeichnet, dass** der Presskolben (4) in der zweiten Phase der Vorschubbewegung solange mit der zweiten Vorschubgeschwindigkeit (V2) vorgeschoben wird, bis ein bestimmter Druck im Pressraum (3) erreicht ist.

6. Verfahren nach einem der vorangehenden Ansprüche, **dadurch gekennzeichnet, dass** vor dem Vorschieben des Presskolbens (4) ein vorhergehender Pressvorgang durchgeführt wird, bei welchem durch Druckbeaufschlagung mit dem Presskolben (4) flüssige Phase von dem Produkt (2) abgepresst wird, und dass zur Vorbestimmung eines Vorschubgeschwindigkeitsprofils, und insbesondere der ersten Position (H1'), die Position (H4) des Presskolbens (4) am Ende des vorhergehenden Pressvorgangs und gegebenenfalls zusätzlich der bei dieser Position erreichte Pressraumdruck (P) ermittelt wird.

7. Verfahren nach Anspruch 6, **dadurch gekennzeichnet, dass** zwischen dem Ende des vorangegangenen Pressvorgangs (H4) und dem Zeitpunkt (H2) des Eintretens der Volumengleichheit von Pressraum (3) und im Pressraum (3) angeordnetem Produkt (2) weiteres Produkt (2) zum Pressraum (3) zugeführt wird.

8. Verfahren nach Anspruch 6, **dadurch gekennzeichnet, dass** zwischen dem Ende des vorangegangenen Pressvorgangs (H4) und dem Zeitpunkt (H2) des Eintretens der Volumengleichheit von Pressraum (3) und im Pressraum (3) angeordnetem Produkt (2) ein Auswaschfluid zum Pressraum (3) zugeführt wird.

9. Verfahren nach einem der Ansprüche 7 bis 8, **dadurch gekennzeichnet, dass** für die Vorausbestimmung des Vorschubgeschwindigkeitsprofils, und insbesondere der ersten Position (H1'), die dem Pressraum (3) zugeführte Produktmenge (2) oder Auswaschfluidmenge ermittelt wird.

10. Verfahren nach einem der vorangehenden Ansprüche, dass die Vorschubgeschwindigkeit des Presskolbens in der zweiten Phase der Vorschubbewegung nach Erreichen eines bestimmten Pressraumdrucks oder nach Erreichen einer bestimmten Presskolbenposition derart geregelt wird, dass ein bestimmter Druckverlauf beim Abpressen von flüssiger Phase vom Produkt (2) erzielt wird.

11. Verfahren nach Anspruch 10, **dadurch gekennzeichnet, dass** der Druckverlauf in Abhängigkeit vom Produkt (2) und/oder in Abhängigkeit vom effektiven Verlauf des Abflusses von flüssiger Phase gewählt wird.

12. Verfahren nach einem der vorangehenden Ansprüche, **dadurch gekennzeichnet, dass** eine Filterpresse (1) verwendet wird, bei der zwischen dem Presskolben (4) und den übrigen Begrenzungen des Pressraums (3) eine Vielzahl flexibler Filterdrainage-Elemente (5) angeordnet ist, zum Abführen der flüssigen Phase des Produkts (2) aus dem Pressraum (3) bei gleichzeitigem Zurückhalten der festen Phase desselben im Pressraum (3) während dem Pressen.

13. Anwendung des Verfahrens nach einem der vorangehenden Ansprüche zur Fest-Flüssig-Trennung von Fruchtmaischen (1) oder von Gemüsemaischen mit einer Filterpresse (1).

14. Filterpresse (1) zur automatisierten Durchführung des Verfahrens nach Anspruch 1, umfassend einen Pressraum (3) zur Aufnahme eines zu pressenden Produkts (2), einen im Pressraum (3) angeordneten Presskolben (4) zur Druckbeaufschlagung des Produkts (2) und eine Pressensteuerung, wobei die Pressensteuerung in der Lage ist, eine Vorschubbewegung des Presskolben ausgehend von einer hinteren Position (H1) bei nicht vollständig mit Produkt (2) gefülltem Pressraum (3) derartig zu steuern, dass der Presskolben (3) ausgehend von der hinteren Kolbenposition (H1) in einer ersten Phase der Vorschubbewegung ohne Druckbeaufschlagung des Produkts (2) eine Verkleinerung des Pressraumvolumens (3) bis auf das Volumen des im Pressraum (3) befindlichen Produkts (2) bewirkt und sodann in einer zweiten Phase der Vorschubbewegung eine Druckbeaufschlagung des Produkts (2) und ein Abpressen von flüssiger Phase von dem Produkt (2) bewirkt, **dadurch gekennzeichnet dass** der Presskolben (4) zum Zeitpunkt (H2) des Eintretens der Volumengleichheit von Pressraum (3) und im Pressraum (3) angeordnetem Produkt (2) eine Vorschubgeschwindigkeit (V2) aufweist, welche kleiner ist als die über die erste Phase der Vorschubbewegung gemittelte durchschnittliche Vorschubgeschwindigkeit (V1m, V1).

15. Filterpresse (1) nach Anspruch 14, **dadurch gekennzeichnet, dass** die Pressensteuerung in der Lage ist, die Vorschubbewegung des Presskolbens (4) gemäss einem, insbesondere in Abhängigkeit von der im Pressraum (3) befindlichen Menge an Produkt (2) und/oder von der Art des Produkts (2) vorbestimmten gestuften oder stufenlosen Vorschubgeschwindigkeitsprofil zu steuern.

16. Filterpresse (1) nach einem der Ansprüche 14 bis 15, **dadurch gekennzeichnet, dass** die Pressensteuerung in der Lage ist, die Vorschubbewegung des Presskolbens (4) derartig zu steuern, dass sich der Presskolben (4) zuerst ausgehend von der hinteren Kolbenposition (H1) mit einer ersten Vorschubgeschwindigkeit (V1) in eine vorbestimmte erste Position (H1') bewegt, in welcher der Pressraum (3) weiterhin nur teilweise mit Produkt (2) gefüllt ist, und sich sodann ausgehend von der ersten Position (H1') mit einer zweiten Vorschubgeschwindigkeit (V2), welche kleiner als die erste Vorschubgeschwindigkeit (V1) ist, in eine zweite Position (H3) bewegt, in welcher das im Pressraum (3) befindliche Produkt (2) vom Presskolben (4) unter Druck gesetzt wird und flüssige Phase vom Produkt (2) abgepresst wird.

17. Filterpresse (1) nach Anspruch 16, **dadurch gekennzeichnet, dass** die Pressensteuerung in der Lage ist, den Füllungsgrad des Pressraums (3) für verschiedenen Positionen des Presskolbens und/oder die voraussichtliche Position (H2) des Presskolbens bei Volumengleichheit von Pressraum und im Pressraum (3) sich befindlicher Produktmenge (2) im Voraus, insbesondere während dem Vorlauf des Presskolbens, zu ermitteln und das Vorschubgeschwindigkeitsprofil derartig einzustellen, dass die erste Position (H1') bei einem bestimmten Füllungsgrad des Pressraums (3) oder bei einem bestimmten Abstand des Presskolbens (4) zu der ermittelten Position (H2), bei welcher Volumengleichheit von Pressraum und im Pressraum (3) sich befindlicher Produktmenge (2) vorliegt, erreicht wird.

18. Filterpresse (1) nach einem der Ansprüche 14 bis 17, **dadurch gekennzeichnet, dass** die Pressensteuerung in der Lage ist, in der zweiten Phase die Vorschubbewegung derartig zu steuern, dass ein insbesondere in Abhängigkeit vom abzupressenden Produkt (2) vorbestimmter Druckverlauf im Pressraum (3) während dem Abpressen von flüssiger Phase vom Produkt (2) eingehalten wird.

19. Filterpresse (1) nach einem der Ansprüche 14 bis 14, **dadurch gekennzeichnet, dass** die Steuerung in der Lage ist, den Druckanstieg in Abhängigkeit vom momentanen Verlauf des Abflusses von flüssiger Phase zu variieren.

20. Filterpresse (1) nach einem der Ansprüche 14 bis 19, **dadurch gekennzeichnet, dass** mit der Pressensteuerung zusätzlich die Zufuhr von abzupressendem Produkt (2) und/oder von Auswaschfluid zum Pressraum (3) insbesondere automatisch steuerbar ist.

21. Filterpresse (1) nach einem der Ansprüche 14 bis 20, **dadurch gekennzeichnet, dass** die Filterpresse (1) zwischen dem Presskolben (4) und den übrigen Begrenzungen des Pressraums (3) eine Vielzahl flexibler Filterdrainage-Elemente (5) aufweist, zum Abführen der flüssigen Phase des Produkts (2) aus dem Pressraum (3) bei gleichzeitigem Zurückhalten der festen Phase desselben im Pressraum (3) während dem Pressen.

22. Verwendung der Filterpresse (1) nach einem der Ansprüche 14 bis 21 zur Fest-Flüssig-Trennung von Frucht- oder Gemüsemaischen (2).

## Claims

1. Method of operating a filter press (1) for the solid-liquid separation of a product (2), comprising a pressing chamber (3) with a plunger (4), including the steps:
a) preparing the filter press (1) by arranging the product (2) to be pressed in the pressing chamber (3) and positioning the plunger (4) in a rear plunger position (H1) in such a manner that the pressing chamber (3) is only partially filled with the product (2), and
b) advancing the plunger (4) in a first phase of the advance movement departing from the rear plunger position (H1) without pressure being applied to the product (2), thereby reducing the volume of the pressing chamber to the volume of the product (2) situated in the pressing chamber (3) and then in a second phase of the advance movement with pressure being applied to the product (2) by the plunger (4) and liquid phase being expressed from the product (2),
**characterised in that**, at the moment (H2) the volume of the pressing chamber (3) becomes equal to the volume of the product (2) arranged in the pressing chamber (3), the plunger (4) is advanced at a velocity (V2) which is lower than the average velocity (V1m, V1) averaged over the first phase of the advance movement.

2. Method according to claim 1, **characterised in that**, in the first phase of the advance movement, the velocity of the plunger is reduced stepwise or steplessly, in particular in accordance with a predetermined velocity profile, from a maximum velocity to the velocity (V2) at the moment (H2) the volume of the pressing chamber (3) becomes equal to the volume of the product (2) arranged in the pressing chamber (3).

3. Method according to claim 2, **characterised in that**, departing from the rear plunger position (H1), the plunger (4) is first advanced at a first velocity (V1) to a predetermined first position (H1') in which the pressing chamber (3) is still only partially filled with the product (2) and then, departing from the first position (H1'), is advanced at a second velocity (V2) lower than the first velocity (V1) to a second position (H3) in which the volume of the pressing chamber (3) is equal to the volume of the product (2) arranged in the pressing chamber (3) and the product (2) situated in the pressing chamber (3) is subjected to pressure by the plunger (4).

4. Method according to claim 3, **characterised in that** the first position (H1') is predetermined in such a manner that, when the plunger (4) is arranged in the first position (H1'), the pressing chamber (3) is filled to a specific degree or the plunger (4) is at a specific distance from the position (H2) in which the volume of the pressing chamber (3) becomes equal to the volume of the product (2) arranged in the pressing chamber (3) when the plunger (4) is advanced further.

5. Method according to one of claims 3 to 4, **characterised in that**, in the second phase of the advance movement, the plunger (4) is advanced at the second velocity (V2) until a specific pressure has been reached in the pressing chamber (3).

6. Method according to one of the preceding claims, **characterised in that** a preceding pressing process in which liquid phase is expressed from the product (2) by applying pressure by means of the plunger (4) is carried out prior to the advance of the plunger (4) and that the position (H4) of the plunger (4) at the end of the preceding pressing process and possibly additionally the pressing chamber pressure (P) reached in this position is/are determined in order to predetermine a velocity profile and, in particular, the first position (H1').

7. Method according to claim 6, **characterised in that** additional product (2) is supplied to the pressing chamber (3) between the end of the preceding pressing process (H4) and the moment (H2) the volume of the pressing chamber (3) becomes equal to the volume of the product (2) arranged in the pressing chamber (3).

8. Method according to claim 6, **characterised in that** a wash fluid is supplied to the pressing chamber (3) between the end of the preceding pressing process (H4) and the moment (H2) the volume of the pressing chamber (3) becomes equal to the volume of the product (2) arranged in the pressing chamber (3).

9. Method according to one of claims 7 to 8, **characterised in that** the quantity of product (2) or the quantity of wash fluid supplied to the pressing chamber (3) is determined in order to predetermine the velocity profile and, in particular, the first position (H 1').

10. Method according to one of the preceding claims, **characterised in that**, once a specific pressing chamber pressure has been reached or once a specific plunger position has been reached, the velocity of the plunger in the second phase of the advance movement is controlled in such a manner that a specific pressure profile is achieved as liquid phase is expressed from the product (2).

11. Method according to claim 10, **characterised in that** the pressure profile is selected as a function of the product (2) and/or as a function of the effective outflow of liquid phase.

12. Method according to one of the preceding claims, **characterised by** the use of a filter press (1) in which a plurality of flexible filter drainage elements (5) are arranged between the plunger (4) and the other boundaries of the pressing chamber (3) for draining off the liquid phase of the product (2) from the pressing chamber (3) while simultaneously retaining the solid phase thereof in the pressing chamber (3) during the pressing operation.

13. Use of the method according to one of the preceding claims for the solid-liquid separation of fruit mash (2) or vegetable mash by means of a filter press (1).

14. Filter press (1) for carrying out the method according to claim 1 in an automated manner, including a pressing chamber (3) for receiving a product (2) to be pressed, a plunger (4) arranged in the pressing chamber (3) for applying pressure to the product (2) and a press control unit, the press control unit being capable of controlling an advance movement of the plunger departing from a rear position (H1) in which the pressing chamber (3) is not completely filled with the product (2) in such a manner that, in a first phase of the advance movement departing from the rear plunger position (H1) without pressure being applied to the product (2), the plunger (4) reduces the volume of the pressing chamber (3) to the volume of the product (2) situated in the pressing chamber (3) and then, in a second phase of the advance movement, applies pressure to the product (2), thereby expressing liquid phase from the product (2), **characterised in that**, at the moment (H2) the volume of the pressing chamber (3) becomes equal to the volume of the product (2) arranged in the pressing chamber (3), the plunger (4) has a velocity (V2) which is lower than the average velocity (V1m, V1) averaged over the first phase of the advance movement.

15. Filter press (1) according to claim 14, **characterised in that** the press control unit is capable of controlling the advance movement of the plunger (4) in accordance with a stepped or stepless velocity profile predetermined, in particular, as a function of the quantity of product (2) situated in the pressing chamber (3) and/or of the nature of the product (2).

16. Filter press (1) according to one of claims 14 to 15, **characterised in that** the press control unit is capable of controlling the advance movement of the plunger (4) in such a manner that, departing from the rear plunger position (H1), the plunger (4) first moves at a first velocity (V1) into a predetermined first position (H1') in which the pressing chamber (3) is still only partially filled with the product (2) and then, departing from the first position (H1'), moves at a second velocity (V2) lower than the first velocity (V1) into a second position (H3) in which the product (2) situated in the pressing chamber (3) is subjected to pressure by the plunger (4) and liquid phase is expressed from the product (2).

17. Filter press (1) according to claim 16, **characterised in that** the press control unit is capable of predetermining the degree to which the pressing chamber (3) is filled for different positions of the plunger and/or the expected position (H2) of the plunger when the volume of the pressing chamber is equal to the volume of the product (2) situated in the pressing chamber (3), in particular, during the forward movement of the plunger, and of adjusting the velocity profile in such a manner that the first position (H1') is reached when the pressing chamber (3) has been filled to a specific degree or when the plunger (4) is at a specific distance from the determined position (H2) in which the volume of the pressing chamber is equal to the volume of the product (2) situated in the pressing chamber (3).

18. Filter press (1) according to one of claims 14 to 17, **characterised in that** the press control unit is capable of controlling the advance movement in the second phase in such a manner that a pressure profile predetermined, in particular, as a function of the product (2) to be pressed is maintained in the pressing chamber (3) while liquid phase is expressed from the product (2).

19. Filter press (1) according to one of claims 14 to 18, **characterised in that** the control unit is capable of varying the increase in pressure as a function of the instantaneous outflow of liquid phase.

20. Filter press (1) according to one of claims 14 to 19, **characterised in that** the supply of product (2) to be pressed and/or of wash fluid to the pressing chamber (3) can additionally be controlled, in particular, automatically, by the press control unit.

21. Filter press (1) according to one of claims 14 to 20, **characterised in that** the filter press (1) has a plurality of flexible filter drainage elements (5) between the plunger (4) and the other boundaries of the pressing chamber (3) for draining off the liquid phase of the product (2) from the pressing chamber (3) while simultaneously retaining the solid phase thereof in the pressing chamber (3) during the pressing operation.

22. Use of the filter press (1) according to one of claims 14 to 21 for the solid-liquid separation of fruit or vegetable mash (2).

## Revendications

1. Procédé pour faire fonctionner, en vue de la séparation solide-liquide d'un produit (2), un filtre-presse (1) comportant une chambre de compression (3) à piston de compression (4), englobant les étapes suivantes :
a) apprêtage du filtre-presse (1) par un produit (2) à exprimer, logé dans la chambre de compression (3), le piston de compression (4) étant placé dans une position postérieure (H1), de telle sorte que ladite chambre de compression (3) ne soit emplie que partiellement par du produit (2) ; et
b) avance du piston de compression (4) à partir de la position postérieure (H1) lors d'une première phase du mouvement d'avance, sans sollicitation du produit (2) par une pression et avec diminution du volume de la chambre de compression jusqu'au volume du produit (2) situé dans ladite chambre de compression (3) ; puis, lors d'une seconde phase dudit mouvement d'avance, avec sollicitation du produit (2) par une pression exercée à l'aide du piston de compression (4), et en exprimant une phase liquide dudit produit (2),
**caractérisé par le fait que**, à l'instant (H2) de l'instauration de l'égalité des volumes de la chambre de compression (3) et du produit (2) logé dans ladite chambre de compression (3), le piston de compression (4) est avancé à une vitesse d'avance (V2) inférieure à la vitesse d'avance moyenne (V1m, V1) dont la moyenne est établie par l'intermédiaire de la première phase dudit mouvement d'avance.

2. Procédé selon la revendication 1, **caractérisé par le fait que** la vitesse d'avance du piston de compression est diminuée par échelons ou en continu lors de la première phase du mouvement d'avance, notamment en conformité avec un profil prédéterminé de la vitesse d'avance et à partir d'une vitesse d'avance maximale, jusqu'à la vitesse d'avance (V2) à l'instant (H2) de l'instauration de l'égalité des volumes de la chambre de compression (3) et du produit (2) logé dans ladite chambre de compression (3).

3. Procédé selon la revendication 2, **caractérisé par le fait que** le piston de compression (4) est tout d'abord avancé à partir de la position postérieure (H1), à une première vitesse d'avance (V1), jusqu'à une première position prédéterminée (H1') dans laquelle la chambre de compression (3) continue de n'être que partiellement emplie de produit (2) ; et est ensuite avancé à partir de ladite première position (H1'), à une seconde vitesse d'avance (V2) inférieure à ladite première vitesse d'avance (V1), jusqu'à une seconde position (H3) dans laquelle est instaurée une égalité des volumes de la chambre de compression (3) et du produit (2) logé dans ladite chambre de compression (3) et ledit produit (2), situé dans ladite chambre de compression (3), est mis sous pression par ledit piston de compression (4).

4. Procédé selon la revendication 3, **caractérisé par le fait que** la première position (H1') est prédéterminée de telle sorte qu'un degré d'emplissage déterminé de la chambre de compression (3) se présente lorsque le piston de compression (4) occupe ladite première position (H1'), ou bien que ledit piston de compression (4) se trouve à une distance déterminée vis-à-vis de la position (H2) dans laquelle une égalité des volumes de la chambre de compression (3), et du produit (2) logé dans ladite chambre de compression (3), s'amorce lors d'une poursuite de l'avance dudit piston de compression (4).

5. Procédé selon l'une des revendications 3 à 4, **caractérisé par le fait que**, durant la seconde phase du mouvement d'avance, le piston de compression (4) est avancé à la seconde vitesse d'avance (V2), jusqu'à ce qu'une pression déterminée soit atteinte dans la chambre de compression (3).

6. Procédé selon l'une des revendications précédentes, **caractérisé par le fait qu'**il s'opère, préalablement à l'avance du piston de compression (4), un processus de compression précédent au cours duquel une phase liquide est exprimée du produit (2) par sollicitation à la pression au moyen dudit piston de compression (4) ; et **par le fait que**, en vue de prédéterminer un profil de vitesse d'avance, et notamment la première position (H1'), l'on établit la position (H4) dudit piston de compression (4) à l'achèvement du processus de compression précédent et additionnellement, le cas échéant, la pression (P) de la chambre de compression qui est atteinte dans cette position.

7. Procédé selon la revendication 6, **caractérisé par le fait que** du produit supplémentaire (2) est délivré à la chambre de compression (3) entre l'achèvement du processus de compression précédent (H4) et l'instant (H2) auquel s'amorce l'égalité des volumes de ladite chambre de compression (3) et du produit (2) logé dans ladite chambre de compression (3).

8. Procédé selon la revendication 6, **caractérisé par le fait qu'**un fluide de lavage est délivré à la chambre de compression (3) entre l'achèvement du processus de compression précédent (H4) et l'instant (H2) auquel s'amorce l'égalité des volumes de ladite chambre de compression (3) et du produit (2) logé dans ladite chambre de compression (3).

9. Procédé selon l'une des revendications 7 à 8, **caractérisé par le fait que** la quantité de produit (2) ou la quantité de fluide de lavage, délivrée à la chambre de compression (3), est établie en vue de la prédétermination du profil de la vitesse d'avance et, en particulier, de la première position (H1').

10. Procédé selon l'une des revendications précédentes, **caractérisé par le fait que** la vitesse d'avance du piston de compression est régulée lors de la seconde phase du mouvement d'avance, après obtention d'une pression déterminée de la chambre de compression, ou après obtention d'une position déterminée dudit piston de compression, de telle sorte qu'une allure de pression déterminée soit atteinte lorsqu'une phase liquide est exprimée du produit (2).

11. Procédé selon la revendication 10, **caractérisé par le fait que** l'allure de pression est choisie en fonction du produit (2) et/ou en fonction de l'allure effective de l'écoulement de phase liquide.

12. Procédé selon l'une des revendications précédentes, **caractérisé par** l'utilisation d'un filtre-presse (1) dans lequel une multiplicité d'éléments souples (5) de drainage de filtration est interposée entre le piston de compression (4) et les autres délimitations de la chambre de compression (3), en vue de l'évacuation de la phase liquide du produit (2) hors de ladite chambre de compression (3) moyennant, dans le même temps, une retenue de la phase solide dudit produit, dans ladite chambre de compression (3), au cours du pressage.

13. Application du procédé selon l'une des revendications précédentes, en vue de la séparation solide-liquide de trempes (2) de fruits ou de trempes de légumes à l'aide d'un filtre-presse (1).

14. Filtre-presse (1) conçu pour la mise en oeuvre automatisée du procédé selon la revendication 1, comprenant une chambre de compression (3) destinée à recevoir un produit (2) à comprimer, un piston de compression (4) logé dans ladite chambre de compression (3) en vue de solliciter ledit produit (2) par une pression, et une commande de pressage, ladite commande de pressage étant en mesure de piloter un mouvement d'avance dudit piston de compression à partir d'une position postérieure (H1), lorsque la chambre de compression (3) n'est pas intégralement emplie de produit (2), de telle sorte que lors d'une première phase du mouvement d'avance et à partir de la position postérieure (H1), le piston de compression (4) provoque, sans sollicitation du produit (2) par une pression, une diminution du volume de la chambre de compression (3) jusqu'au volume du produit (2) logé dans ladite chambre de compression (3) ; et provoque ensuite, lors d'une seconde phase dudit mouvement d'avance, une sollicitation dudit produit (2) par une pression et un pressage séparant une phase liquide d'avec ledit produit (2), **caractérisé par le fait que** ledit piston de compression (4) présente, à l'instant (H2) de l'instauration de l'égalité des volumes de la chambre de compression (3) et du produit (2) logé dans ladite chambre de compression (3), une vitesse d'avance (V2) inférieure à la vitesse d'avance moyenne (V1m, V1) dont la moyenne est établie par l'intermédiaire de la première phase dudit mouvement d'avance.

15. Filtre-presse (1) selon la revendication 14, **caractérisé par le fait que** la commande de pressage est en mesure de piloter le mouvement d'avance du piston de compression (4) en conformité avec un profil de vitesse d'avance, échelonné ou continu, prédéterminé en fonction de la quantité de produit (2) située dans la chambre de compression (3), et/ou de la nature dudit produit (2).

16. Filtre-presse (1) selon l'une des revendications 14 à 15, **caractérisé par le fait que** la commande de pressage est en mesure de piloter le mouvement d'avance du piston de compression (4) de façon telle que ledit piston de compression (4) se meuve tout d'abord à partir de la position postérieure (H1), à une première vitesse d'avance (V1), jusqu'à une première position prédéterminée (H1') dans laquelle la chambre de compression (3) continue de n'être que partiellement emplie de produit (2) ; et se meut ensuite à partir de ladite première position (H1'), à une seconde vitesse d'avance (V2) inférieure à ladite première vitesse d'avance (V1), jusqu'à une seconde position (H3) dans laquelle le produit (2) logé dans la chambre de compression (3) est mis sous pression par ledit piston de compression (4), et une phase liquide est exprimée dudit produit (2).

17. Filtre-presse (1) selon la revendication 16, **caractérisé par le fait que** la commande de pressage est en mesure d'établir par anticipation, notamment lors de l'avance du piston de compression, le degré d'emplissage de la chambre de compression (3) pour différentes positions dudit piston de compression, et/ou la position prévisionnelle (H2) dudit piston de compression en cas d'égalité des volumes de ladite chambre de compression et de la quantité de produit (2) logée dans ladite chambre de compression (3) ; et de régler le profil de la vitesse d'avance de façon telle que la première position (H1') soit atteinte en présence d'un degré d'emplissage déterminé de ladite chambre de compression (3), ou en présence d'une distance déterminée dudit piston de compression (4) vis-à-vis de la position établie (H2), dans laquelle il existe une égalité de volumes de la chambre de compression et de la quantité de produit (2) logée dans ladite chambre de compression (3).

18. Filtre-presse (1) selon l'une des revendications 14 à 17, **caractérisé par le fait que** la commande de pressage est en mesure de piloter le mouvement d'avance, durant la seconde phase, de façon telle qu'une allure de pression dans la chambre de compression (3), notamment prédéterminée en fonction du produit (2) à exprimer, soit maintenue au cours du pressage séparant une phase liquide d'avec ledit produit (2).

19. Filtre-presse (1) selon l'une des revendications 14 à 18, **caractérisé par le fait que** la commande est en mesure de faire varier l'accroissement de pression en fonction de l'allure momentanée de l'écoulement de phase liquide.

20. Filtre-presse (1) selon l'une des revendications 14 à 19, **caractérisé par le fait que** la délivrance de produit (2) à exprimer et/ou de fluide de lavage, à la chambre de compression (3), peut être additionnellement pilotée à l'aide de la commande de pressage, en particulier automatiquement.

21. Filtre-presse (1) selon l'une des revendications 14 à 20, **caractérisé par le fait que** ledit filtre-presse (1) présente, entre le piston de compression (4) et les autres délimitations de la chambre de compression (3), une multiplicité d'éléments souples (5) de drainage de filtration en vue de l'évacuation de la phase liquide du produit (2) hors de ladite chambre de compression (3) moyennant, dans le même temps, une retenue de la phase solide dudit produit, dans ladite chambre de compression (3), au cours du pressage.

22. Utilisation du filtre-presse (1) selon l'une des revendications 14 à 21, en vue de la séparation solide-liquide de trempes (2) de fruits ou de légumes.
